# EUROPEAN PATENT APPLICATION

(11) **EP 4 435 391 A1**
(43) Date of publication of application: **25.09.2024**
(21) Application number: 23164169.7
(22) Date of filing: 24.03.2023
(51) Int. Cl.: G01J 3/02, G01J 3/28, G01J 3/50, G01J 3/10, G01N 21/47, G01N 21/88

(54) **METHOD AND DEVICE FOR INVESTIGATING THE VISUAL APPEARANCE OF A SAMPLE SURFACE**

(71) Applicant: X-Rite Europe GmbH, 8105 Regensdorf (CH)
(72) Inventor: Kaldewey, Timo, CH-8105 Regensdorf (CH); Schimun, Denoth, CH-8105 Regensdorf (CH)
(74) Representative: Jonas, Hans-Hermann

(57) **Abstract**

A method for investigating visual appearance of a sample surface using a handheld measuring device is disclosed. A combined image (140) of a measurement area on the sample surface is obtained using at least one integrated light source and at least one integrated camera of the handheld measuring device and is displayed on a display device. The combined image is a combination of a first image (110) and a second image (120) under directional illumination. The first image (110) is acquired with a first measurement geometry, in which the observation direction is oriented at a first aspecular angle having an absolute value of at least 30°, and the second image (120) is acquired with a second measurement geometry, in which the observation direction is oriented at a second aspecular angle having an absolute value of not more than 15°. In this manner, the combined image provides a realistic color impression while ensuring that defects are well visible.

## Description

### TECHNICAL FIELD

The present invention relates to a method for investigating the visual appearance of a sample surface and to a handheld measuring device that is configured to carry out the method.

### PRIOR ART

In the car refinish business, handheld multi-angle spectrophotometers are used in combination with color formulation software to efficiently find a paint recipe that achieves a good color match with an existing vehicle part. The spectrophotometer is used to determine appearance attributes of the paint coating of the vehicle part, in particular, color attributes and possibly texture attributes. The formulation software receives these appearance attributes and proposes a matching paint recipe.

In such a procedure, it is essential that the measurement of the appearance attributes with the multi-angle spectrophotometer is carried out on a portion of the existing vehicle part that has as few defects as possible. Possible defects include scratches, holes and air pockets. The presence of defects negatively affects the measurement results and can cause the spectrophotometer to output appearance attributes that do not correspond to the true appearance of the vehicle part. As a result, the paint recipe that is provided by the formulation software may lead to a visible color gap to the existing paint coating. This may cause costly and time-consuming repetitions of the coating process until a satisfactory match is achieved.

Some modern handheld multi-angle spectrophotometers have an integrated camera and an integrated color display, making it possible to acquire and display a magnified preview image of a measurement area on the existing vehicle part. By observing the preview image, an operator may be able to recognize defects before a measurement is carried out. However, operators are not always well trained and might be under time pressure to get the job done. Furthermore, the integrated displays in handheld spectrophotometers are usually rather small and of limited quality, resulting in limited contrast and brightness. This makes it difficult to recognize defects in the preview images, especially under difficult lighting conditions, e.g., in bright sunlight on a parking lot. For these and other reasons, defects can go unnoticed.

Similar problems may also arise in other contexts where it is desired to obtain a preview image of a sample surface using a handheld measuring device having an integrated light source and an integrated camera.

### SUMMARY OF THE INVENTION

It is an object of the present invention to provide a method for investigating the visual appearance of a sample surface using a handheld measuring device, wherein the method enables a realistic preview of a measurement area on the sample surface while facilitating the recognition of defects in the measurement area.

This object is achieved by a method according to claim 1. Further embodiments are laid down in the dependent claims.

A method for investigating the visual appearance of a sample surface using a handheld measuring device is provided. The handheld measuring device comprises at least one integrated light source and at least one integrated camera. The at least one integrated light source is configured to illuminate a measurement area (measurement spot) of the sample surface, and the at least one integrated camera is configured to acquire images of the measurement area. The method comprises:
obtaining a combined image of the measurement area, using the at least one integrated camera and the at least one integrated light source; and
displaying the combined image on a display device,
wherein the combined image is a combination of a first image and a second image,
wherein each of the first and second images is an image of the measurement area along an observation direction under illumination with directional light (e.g., collimated light) along an illumination direction,
wherein the illumination direction and the observation direction for the first image define a first measurement geometry, in which the observation direction is oriented at a first aspecular angle with respect to a specular direction to the illumination direction, the first aspecular angle having an absolute value of at least 30°, and
wherein the illumination direction and the observation direction for the second image define a second measurement geometry, in which the observation direction is oriented at a second aspecular angle with respect to a specular direction to the illumination direction, the second aspecular angle having an absolute value of not more than 15°.

The first image may be a multi-spectral image, in particular a color image in a suitable color space, e.g. an RGB color image. It is acquired at a comparatively large aspecular angle of at least 30° with respect to the specular direction. In some embodiments, the aspecular angle may be at least 45° or even at least 60°. Images recorded at a large aspecular angle generally provide a realistic color impression of the measurement spot. However, defects may be difficult to discern in such images.

The second image may be a multi-spectral image or a grayscale image. It is acquired at a near-specular angle, i.e., at a small aspecular angle of not more than 15° with respect to the specular direction. In some embodiments, the aspecular angle may be not more than 10° or even not more than 5°. In some embodiments, the aspecular angle may be 0°, i.e., the observation direction may essentially correspond to the specular direction. Defects are generally better visible in images recorded at small aspecular angles than in images recorded at large aspecular angles. However, such images may provide a less realistic color impression.

In order to obtain a realistic color impression while still ensuring that defects are well visible, a combined color image is formed by combining the first image and the second image. In addition to improving the visibility of defects, also the visibility of sparkles may in this manner be improved. Sparkles may result from the presence of highly reflecting (e.g., metallic) flakes in a coating that forms the sample surface.

In some embodiments, the second image may be processed, and the processed second image may be overlaid onto the (unprocessed or processed) first image. Processing the second image may comprise converting the second image from a multi-spectral (e.g., RGB) image to a grayscale image. Processing the second image may also comprise applying a defect detection algorithm to the (unconverted or converted) second image to identify image portions in the second image that represent defects. For example, in a simple embodiment, defects may be detected by a thresholding algorithm, which identifies image portions that have a brightness value that is above a brightness threshold, assuming that defects are brighter than the surrounding surface portions, or by an edge detection algorithm, assuming that defects exhibit strong contrast to the surrounding surface portions. Other, possibly more sophisticated algorithms for defect detection may be used. Optionally, sparkles may be identified in the second image in a similar manner. Processing the second image may further comprise making the second image partially or fully transparent in image portions in which no defects and, optionally, sparkles have been detected. In this manner, only image portions of the second image that represent defects and, optionally, sparkles are overlaid onto the first image. The resulting combined image provides a realistic color impression of the measurement area while clearly showing the presence or absence of defects in the measurement area.

In some embodiments, the illumination direction in the second measurement geometry is different from the illumination direction in the first measurement geometry. For example, the handheld measuring device may comprise a first light source and a second light source. In the first measurement geometry, the first light source may illuminate the measurement area with directional light along a first illumination direction. In the second measurement geometry, the second light source may illuminate the measurement area with directional light along a second illumination direction that is different from the first illumination direction. In alternative embodiments, the same light source may be moved between a first position for illuminating the measurement area along the first illumination direction and a second position for illuminating the measurement area along the second illumination direction. The observation direction may be identical for both measurement geometries, and the same camera may be used in the first and second measurement geometries for obtaining the combined image.

In some embodiments, the same integrated camera is used in both the first and second measurement geometries, and the combined image is obtained by simultaneously or consecutively illuminating the measurement area along the first illumination direction, using the first light source, and along the second illumination direction, using the second light source, during the same integration window of the integrated camera, or in other words, during a single exposure of the camera. In this manner, the combined image is obtained directly in hardware using the image detector of the camera, without requiring any software for forming the combined image. Such embodiments are particularly useful in situations where the measurement device does not comprise powerful processors with sufficient computing power for forming the combined image by computations in software.

In other embodiments, the illumination direction may be identical for both measurement geometries, while the observation directions may be different. For example, the handheld measuring device may comprise a first camera and a second camera. In the first measurement geometry, the first camera may image the measurement area along a first observation direction. In the second measurement geometry, the second camera may image the measurement area along a second illumination direction that is different from the first observation direction. In alternative embodiments, the same camera may be moved between a first position for imaging the measurement area along the first observation direction and a second position for imaging the measurement area along the second observation direction.

In yet other embodiments, both the illumination direction and the observation direction may be different between the first and second measurement geometries. For example, a first light source and a first camera may be employed in the first measurement geometry, and a second light source and a second camera may be employed in the second measurement geometry.

It is conceivable that in the first and/or second measurement geometry the measurement area is illuminated from more than one single illumination direction. In particular, if the handheld measuring device comprises two light sources, it is conceivable that in the second measurement geometry both the first light source and the second light source are activated. In this case, it is preferred that during acquisition of the second image, the second light source is operated at higher luminance towards the measurement area than the first light source. For example, the first light source may be permanently activated to illuminate the measurement area while the first and second images are acquired. Only during acquisition of the second image, the second light source may then be activated to provide additional illumination from the second illumination direction, similar to a flash. This may be advantageous because the first light source is operated at stationary operating conditions, ensuring high reproducibility of the first images while still facilitating the recognition of defects based on the second image.

In some embodiments, the combined image is only displayed while the handheld measuring device is stationary. To this end, the handheld measuring device may comprise at least one motion sensor, and the handheld measuring device may be configured to detect movements of the handheld measuring device based on signals from the motion sensor. In other embodiments, the handheld measuring device may be configured to detect movements based on an analysis of consecutive images that are acquired by the at least one integrated camera of the handheld measuring device. The combined image may be displayed on the display device only when the detection of movements indicates that the handheld measuring device has been stationary for a predetermined amount of time. In this manner, the combined image represents the appearance of the measurement area at the location where the handheld measuring device is actually located while the combined image is being displayed, enabling the user to decide whether the measurement area onto which the handheld measuring device has been placed is free of defects.

The method may further comprise:
continuing to acquire further consecutive images of the measurement area and to detect whether the handheld measuring device is remaining stationary, based on an analysis of the further consecutive images; and
stopping the displaying of the combined image on the display device when the detection shows that the handheld measuring device has been moved.

In some embodiments, more traditional "simple" preview images are displayed on the display device when it is determined that the handheld measuring device is being moved. These preview images may be images obtained with a single measurement geometry, i.e., images that do not result from combining images acquired with different measurement geometries. In particular, the preview images may be acquired using the same light source and camera that are used in the first or second measurement geometry. The same images may be used for obtaining the preview images and for detecting movements of the handheld measuring device, e.g., the preview images may be based on the previously described consecutive images that are also used for detecting movements.

The method may further comprise a step of carrying out a spectral measurement of the measurement area using a spectrally resolving detector that is integrated in the handheld measuring device. For example, the handheld measuring device may be a spectrophotometer comprising at least one spectral sensor for carrying out spectral measurements. In some embodiments, the spectral measurement is carried out only once a trigger signal is received from a user. The handheld measuring device may be configured to carry out the spectral measurement only while the handheld measuring device is stationary. To this end, the handheld measuring device may be configured to detect movements of the handheld measuring device, as explained above.

The display device on which the combined image is displayed is preferably integrated into the handheld measuring device. In other embodiments, the display device may be a separate unit. In such embodiments, the handheld measuring device may be configured to transmit the first and second images and/or the combined image to the display device via a wired or wireless connection. The display device may for example be a standalone computer monitor, or it may be integrated into a handheld computing device that is separate from the handheld measuring device, such as a smartphone or a tablet computer.

In another aspect, the present invention provides a handheld measuring device that is configured to carry out the method described herein. The handheld measuring device comprises:
at least one integrated light source;
at least one integrated camera; and
a control device configured to carry out the method described herein.

The handheld measuring device may further comprise a spectrally resolving detector, and the control device may be configured to cause the spectrally resolving detector to carry out a spectral measurement of the measurement area.

The handheld measuring device may comprise a housing having a measurement opening, a housing portion around the measurement opening defining a measurement plane and a device normal that is perpendicular to the measurement plane. The at least one light source and the at least one camera may be arranged in the handheld measuring device in such a manner that in each of the two measurement geometries, the illumination direction, the observation direction and the device normal are co-planar and are oriented at angles to the device normal such that the observation direction is oriented at the desired aspecular angle with respect to a specular direction to the illumination direction when the sample surface is parallel to the measurement plane.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows a perspective view of an exemplary handheld measuring device according to the prior art;
- Fig. 2: shows a perspective view of a measurement array of the handheld measuring device in Fig. 1;
- Fig. 3: shows an illustration of possible measurement geometries in the handheld measuring device in Fig. 1;
- Fig. 4: shows a diagram illustrating, in a highly schematic manner, how a combined image may be obtained from a first image and a second image;
- Fig. 5: shows a flow diagram illustrating an exemplary method for investigating the visual appearance of a sample; and
- Fig. 6: shows a schematic hardware-oriented illustration of electronic circuitry in the multi-angle spectrophotometer of Fig. 1.

### DESCRIPTION OF PREFERRED EMBODIMENTS

In the context of the present disclosure, light from a light source is directed from a light source to a measurement area (also called a measurement spot) on a sample surface along an illumination direction, and reflected light from the measurement area is detected by a digital camera along an observation direction. It is to be understood that due to the finite sizes of the light source aperture and of the measurement area, there is always a finite range of directions along which a light ray can propagate from the light source to the measurement area. The "illumination direction" is to be understood to be the direction along which a light ray propagates from the center of the light source aperture to the center of the measurement area. The angular range of the directions under which the measurement area is actually illuminated by the light source may be generally narrow, e.g., less than 10°, preferably less than 8° (as stipulated in standard ATSM 2194-14), or even less than 5°. Likewise, due to the finite size of the camera aperture and of the measurement area, there is always a finite range of directions along which a light ray can propagate from the measurement area to the camera and be recorded by the image sensor of the camera. The "observation direction" is to be understood to be the direction along which a light ray propagates from the center of the measurement area to the center of the camera aperture. Again, the angular range of the directions of the rays from the measurement area to the camera aperture may generally be narrow, e.g., less than 10°, preferably less than 8° (as stipulated in standard ATSM 2194-14), or even less than 5°.

The term "specular direction" designates the direction into which light that impinges onto the sample surface along the illumination direction is reflected by the sample surface by a specular (mirror-like) reflection. The term "aspecular angle" designates the angle between the observation direction and the specular direction. The aspecular angle may be defined in a plane spanned by the illumination direction and the specular direction. The aspecular angle then is considered positive when measured from the specular direction towards the normal direction of the sample surface.

A "multi-spectral image" is a collection of two or more monochrome images of the same scene in different spectral bands. An example of a multi-spectral image is a color image, in particular, an RGB color image, which consists of a red, a green and a blue image. A "grayscale image" is an image in which the value of each pixel represents only an amount of light; that is, it carries only brightness information without carrying color information.

"Edge detection" refers to a variety of mathematical methods that aim at identifying edges in a digital image, at which the image brightness changes sharply or has discontinuities. Many edge detection algorithms are known in the art and may be employed in the context of the present disclosure.

### Exemplary handheld measuring device

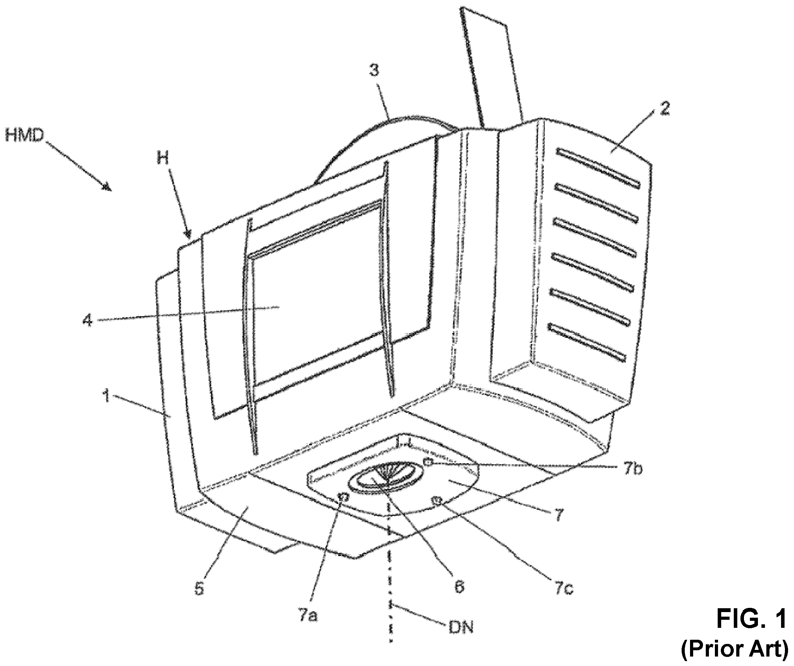

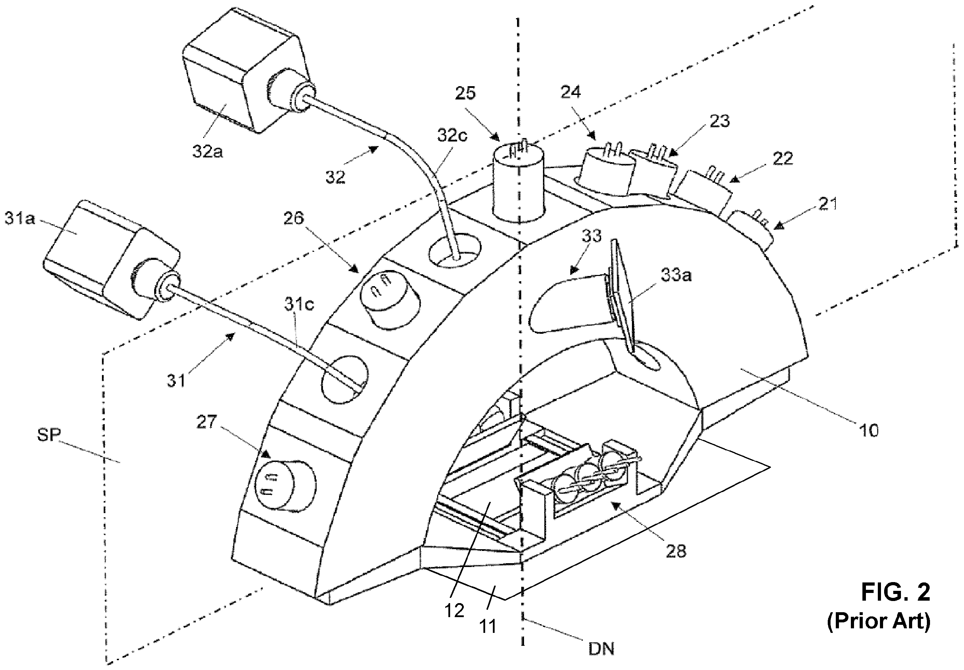

An exemplary handheld measuring device that may be used in the context of the present disclosure is illustrated in Figs. 1 and 2. The handheld measuring device of Figs. 1 and 2 is a multi-angle spectrophotometer with imaging capabilities, as described in greater detail in document US20140152990A1, the contents of which are incorporated herein in their entirety by reference for teaching a hand-held multi-angle spectrophotometer having imaging capabilities. However, the present invention is not limited to any particular type of handheld measuring device, and any handheld measuring device that includes at least one light source and at least one camera with an image detector may be used.

The handheld measuring device that is illustrated Figs. 1 and 2 is configured for capturing the appearance of a surface of a measurement object, in the following referred to as the "sample surface". In the following, the term "measurement array" is understood to mean the sum of the components of the handheld measuring device which serve to illuminate a measurement area on the sample surface, to capture light reflected from this measurement area and to convert it into corresponding electrical signals. The term "device normal" is understood to mean an imaginary straight line which is fixed relative to the handheld measuring device, extends essentially through the center point of a measurement opening of the device and is perpendicular to the sample surface when the handheld measuring device is positioned on a planar sample surface. The plane of the measurement opening usually lies parallel to the sample surface, such that the device normal is also perpendicular to the measurement opening. The term "vertical" is understood to mean the direction of the device normal. Accordingly, "vertical sections" are to be understood to mean planar sections in a plane that contains the device normal or is parallel to the device normal. In the following description of the handheld measuring device, directions and/or angles are relative to the device normal, which is spatially fixed with respect to the handheld measuring device.

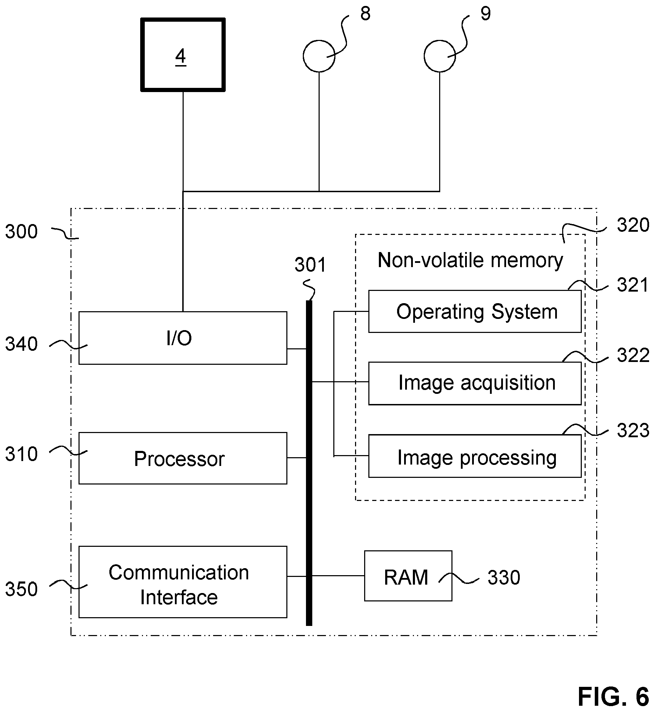

The handheld measuring device shown in Fig. 1 is indicated as a whole by the reference sign HMD. It comprises a housing H which accommodates a measurement array, illustrated in Fig. 2, and a control device, schematically illustrated in Fig. 6, which controls the measurement array. Two gripping parts 1 and 2 are embodied laterally on the housing H. A wrist strap 3 is arranged on the upper side of the housing H. A display device 4 is provided on the front side of the housing H. Operating buttons (not shown) are arranged on the upper side of the housing H.

The lower side of the housing H comprises a housing base 5 carrying a base plate 7, which is provided with a measurement opening 6. The housing base 5 comprises an aperture (not indicated by a reference sign) in the region of the measurement opening 6, such that light can exit the interior of the housing through the aperture and the measurement opening 6 and, conversely, light from outside can enter the interior of the housing through the measurement opening 6 and the aperture. Three support pins 7a , 7b and 7c are arranged around the measurement opening 6 on the base plate 7 and help in enabling the measurement device to be correctly positioned even on curved measurement surfaces, such that the device normal completely or at least largely coincides with the normal of the measurement surface in the center point of the measurement area.

The device normal is indicated in Fig. 1 by the reference sign DN. It is perpendicular to the base plate 7 and extends through the center point of the measurement opening 6.

The setup of the measurement array is illustrated in Fig. 2. It comprises an arc body 10 which is fixedly held in the housing H and in which optical and/or photoelectric components of the measurement array are arranged. In the exemplary embodiment shown, these components comprise seven directional light sources (illumination means) 21, 22, 23, 24, 25, 26, and 27, and three pick-up means 31, 32, and 33. Additionally, a diffusely illuminating illumination means 28 is also provided in the immediate vicinity of the measurement opening 6.

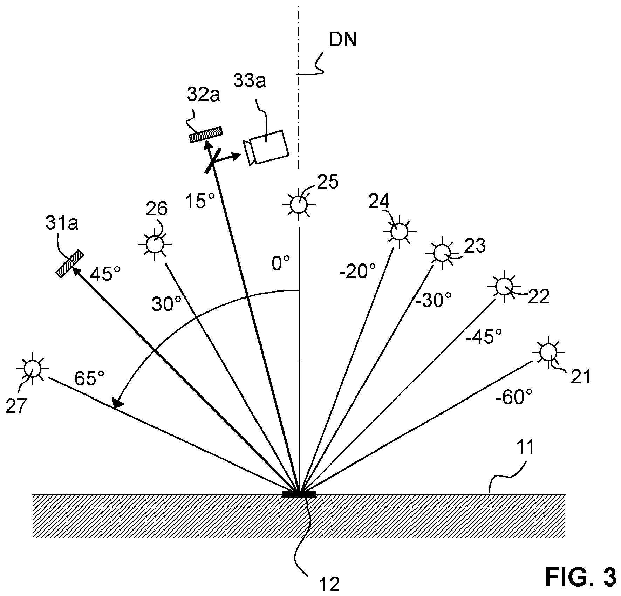

The seven directional light sources 21 to 27 illuminate a measurement area 12 on a sample surface 11 of a measurement object along different illumination directions in relation to the device normal DN. For instance, the optical axes of the directional light sources 21 to 27 may be oriented at anormal angles of -60°, -45°, -30°, -20°, 0°, +30° and +65° relative to the device normal, as illustrated in Fig. 3. All seven directional light sources 21 to 27 are arranged such that their optical axes lie in a common plane which contains the device normal DN, in the following referred to as the system plane SP. Each directional light source 21-27 may comprise a white LED and at least one optical component such as one or more lenses to create a collimated or focused beam along the respective illumination direction.

Two of the three pick-up means 31 to 33 are embodied as spectral measurement channels; and the third pick-up means is embodied as a spatially resolved color measurement channel (imaging channel). The pick-up means receive measurement light reflected from the illuminated measurement area at viewing angles of +15° and +45° in the system plane SP. The two pick-up means 31, 32 that form spectral measurement channels comprise two spectrally resolving detector (e.g., spectrometers) 31a and 32a to which the measurement light is fed by means of lenses and optical fibers 31c and 32c. The pick-up means 33 that forms a spatially resolved measurement channel comprises a multi-spectral camera 33a, e.g., a color-enabled (RGB) camera, to which measurement light is applied via a beam splitter and a lens (not shown). The beam splitter is situated in the pick-up beam path of the pick-up means 32 and directs a part of the measurement light at the viewing angle of +15° laterally out of the arc body 10 onto the camera 33a. The pick-up means 32 and 33 thus share the measurement light and receive it at exactly the same viewing angle.

The measurement geometry is the reverse of ASTM standards E2194 and E2539, in which two illuminations at 15° and 45° and six spectral channels at 0°, 30°, 65°, -20°, -30° and -60° are defined for measurements of metallic and pearlescent effect pigments. One additional illumination means 22 at angle -45° is provided for measuring gloss in combination with the pick-up means 31.

The two spectrometers 31a and 32a spectrally resolve the measurement light fed to them at the viewing angles 45° and 15°, respectively, and respectively produce a set of spectral measurement values per measurement, each measurement value corresponding to intensity in a different wavelength range. The spectrometers 31a, 32a do not spatially resolve the measurement light, i.e., they spectrally resolve the entire measurement light that they receive.

The camera 33a resolves the measurement light fed to it at the viewing angle 15° both spatially and spectrally. Spectral resolution may be limited to three channels according to the three colors RGB. The RGB camera correspondingly produces a raw dataset ("raw image") of 3*n measurement values per measurement, wherein n is the number of resolved pixels.

The diffusely illuminating illumination means 28 is provided so that the measuring device also supports a measurement mode with diffuse illumination conditions. The illumination means 28 may be configured as an LED background illumination which illuminates the measurement object directly from a large angular range. It may comprise two rows of white light-emitting diodes arranged on both sides of the measurement opening 6 and two inclined diffusor films, each assigned to one row, for homogenizing the illumination. The two rows of LEDs can be separately controlled by the control circuitry.

Of course, depending on the envisaged application, other types of illumination means can be employed as well.

The handheld measuring device HMD described above is equipped with seven illumination means and three pick-up means for measuring purposes. It is possible to use other combinations of illumination means and pick-up means. The illumination means need not necessarily be arranged in a plane.

### Acquiring images and computing a combined image

The handheld measuring device HMD may be used to acquire images with two different measurement geometries. In each measurement geometry, the measurement area is illuminated with directional (e.g., collimated or focused) light from one of the directional light sources 21-27 in the handheld measuring device HMD, and an image is acquired by the camera 33a along the observation direction at an anormal angle of 15° relative to the device normal DN.

In the first measurement geometry, the observation direction is oriented at an aspecular angle having an absolute value of at least 30° relative to the specular direction defined by the illumination direction of a first light source. For example, the measurement area 12 may be illuminated by light source 21, for which the illumination direction is at an anormal angle of -60° and the specular direction is at an anormal angle of +60°. Since the observation direction is at an anormal angle of +15°, the aspecular angle is 60° - 15° = 45°. Instead of light source 21, light source 22 (aspecular angle of 30°), light source 26 (aspecular angle of -45°) or light source 27 (aspecular angle of -80°) may be employed for the first measurement geometry.

In the second measurement geometry, the observation direction is oriented at a near-specular angle, i.e., at an aspecular angle having an absolute value of not more than 15° relative to the specular direction. For example, the measurement area may be illuminated by a second light source 24, for which the illumination direction is at an anormal angle of - 20° and the specular direction is at an anormal angle of +20°. Since the observation direction is at an anormal angle of +15°, the aspecular angle is 20° - 15° = 5°. Instead of light source 24, light source 23 (aspecular angle of 15°) may be employed for the second measurement geometry

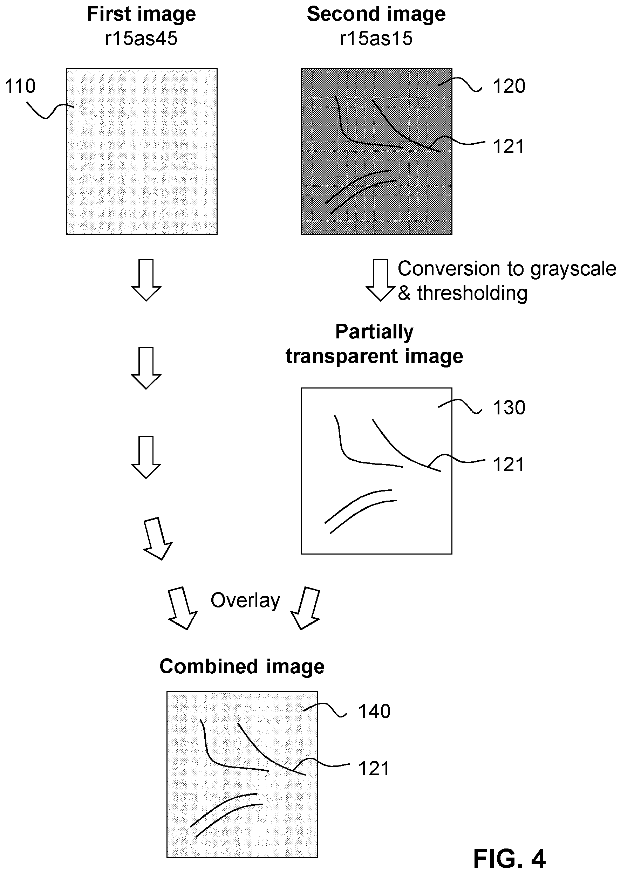

The images 110, 120 recorded in the two different measurement geometries are schematically illustrated in Fig. 4. The first image 110 was acquired with the first measurement geometry, at a relatively large aspecular angle. This image provides a realistic representation of the color impression of the measurement area. However, defects may be difficult to discern and may even be invisible in this image. The second image 120 was acquired with the second measurement geometry, i.e., in a near-specular geometry. In this image, the representation of color may be less realistic, but defects 121 such as scratches can be easily discerned.

The images are now combined into a combined image 140. To this end, the second image 120 may first be converted into a grayscale image, and a thresholding or edge detection algorithm may be applied to the converted second image to identify those image portions that represent defects 121. The remaining image portions may be made partially or fully transparent. The resulting, partially transparent image 130 may then be overlaid onto the first image 110 to form the combined image 140. The resulting combined image 140 has high color fidelity while making the defects 121 readily visible. The combined image 140 is displayed on the display device 4 of the handheld measuring device HMD.

For converting the multi-spectral second image 120 into a grayscale image, any suitable algorithm may be used. For example, each pixel value of the grayscale image may be computed as a (possibly weighted) average of the pixel values for each spectral channel of the multi-spectral image, e.g., by averaging the R, G and B pixel values, or the color space used for the multi-spectral second image 120 may be mapped to a suitable grayscale color space in any other manner.

For identifying image portions of the second image that represent defects 121, any suitable algorithm may be used. In a particularly simple embodiment, a brightness threshold may be defined, e.g. as a fixed fraction of the average brightness of the second image, and any image portion having a brightness below the brightness threshold is considered to represent a defect. In other embodiments, an edge detection method is employed to identify image portions that exhibit sharp brightness changes or brightness discontinuities, and any such image portion is considered to represent a defect.

In the present example, the combined image 140 is computed by the control device 300 inside the handheld measuring device HMD and is displayed by the built-in display device 4 of the handheld measuring device HMD. However, the combined image 140 may instead or additionally be displayed on an external display device, for example, on an external computer monitor or on a built-in display of a handheld computing device such as a smartphone or tablet computer. To this end, the control device 300 of the handheld measuring device HMD may be equipped with a wired or wireless interface for transmitting the combined image 140 to the external display device. In some embodiments, the combined image may be computed by an external computing device instead of being computed by the control device 300 in the handheld measuring device HMD. In such cases, the control device 300 of the handheld measuring device HMD may be configured to transmit images to the external computing device and possibly receive images from the external computing device. In particularly simple embodiments, the combined image may instead be obtained by activating the light sources for both the first and second measurement geometries during the same integration window of the camera 33a. In this manner, the combined image is directly formed in the image sensor of the camera 33a, without requiring any computations in software.

### Detection of movements

In advantageous embodiments, the control device 300 is configured to detect whether the handheld measuring device HMD is being moved, and to compute and display the combined image 140 only while the handheld measuring device HMD is stationary.

To this end, the handheld measuring device HMD may comprise one or more motion sensors, such as accelerometers and gyroscopes, that interact with the control device 300. However, motions may instead be detected by analyzing consecutive images that are acquired with the camera 33a. For example, the consecutive images may be images that are acquired anyway to be displayed on the display device 4 to provide the user with preview images of the sample surface. The consecutive images may be acquired in the first measurement geometry, in the second measurement geometry, or in any other measurement geometry. For example, the consecutive images may be acquired in a near-specular geometry, which may or may not be the second measurement geometry, to ensure that any defects of the measurement area are well visible in the consecutive images. By identifying the defects in the consecutive images and analyzing their location in the images, the control device 300 (or an external computing device) can readily determine to what extent the handheld measurement device has been moved between two consecutive images. In other embodiments, the consecutive images are acquired in an aspecular geometry, e.g., in the first measurement geometry.

When it has been determined that the handheld measuring device HMD has not been moved (has been stationary) for a predetermined amount of time, e.g., for at least one second, the control device 300 may cause the handheld measurement device HMD to acquire the first and second images 110, 120, to compute the combined image 140 from these images, and to display the combined image 140 on the display device 4. If the consecutive images that are used for detecting movements are acquired in the first or second measurement geometry, one of these images may be used as the first or second image 110, 120, respectively, for computing the combined image 140.

The control device 300 may further be configured to continue acquiring consecutive images with the camera 33a and to analyze whether the handheld measurement device HMD is remaining stationary. Once the control device 300 determines that the handheld measurement device is not stationary any more, the control device 300 may cause the display device 4 to stop displaying the combined image 140 and display the consecutive images as preview images again.

### Continuous operation of first light source

For ensuring that the first images are recorded under controlled conditions, thereby ensuring high color fidelity of the first images, the control device 300 may operate the first light source (e.g., the light source 21) in a continuous mode, without interrupting operation of the first light source during acquisition of the second image 120. In such embodiments, the control device 300 may briefly activate the second light source (e.g., the light source 24) in addition to the first light source during acquisition of the second image 120, similar to the operation of a flash. For ensuring that the resulting second image clearly shows any defects that are present in the measurement area 12, it is advantageous if the luminance of the second light source towards the measurement area 12 during acquisition of the second image is higher than then luminance of the first light source.

### Spectral measurements

The handheld measuring device HMD may be configured to carry out one or more spectral measurements, using the spectrally resolving detectors 31a, 32a, when the control device 300 receives a corresponding trigger signal. The trigger signal may be received from a user of the handheld measuring device HMD. For example, the user may issue a trigger signal by pressing a button on the handheld measuring device when the user determines that no defects are visible in the combined image 140. Execution of the spectral measurements may be conditional on the handheld measuring device HMD being stationary; otherwise, an error message may be outputted to the user.

### Flow diagram

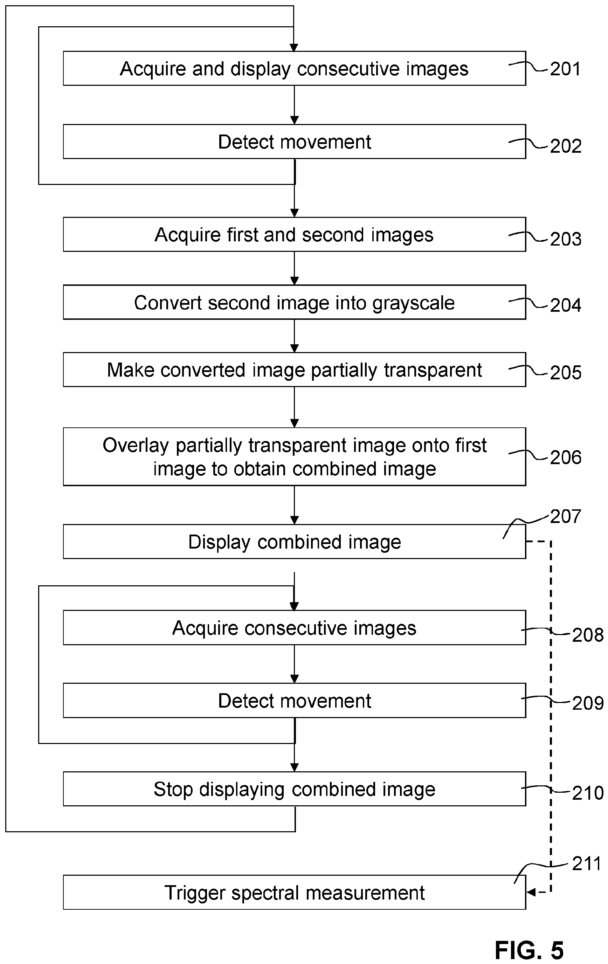

Figure 5 shows a flow diagram illustrating an exemplary method in accordance with the present disclosure.

In step 201, consecutive images of the measurement area are acquired by the camera 33a and are displayed as preview images on the display device 4. In step 202, the consecutive images are analyzed to detect whether the handheld measuring device HMD has been moved. If it is detected that the handheld measuring device HMD is stationary, first and second images 110, 120 are acquired in step 203. In step 204, the second image 120 is converted into grayscale. In step 205, defects are detected in the converted second image, and the converted second image 120 is made transparent in portions where no defects are located to obtain a partially transparent image 130. In step 206, the partially transparent image 130 is overlaid onto the first image 110 to obtain a combined image 140. In step 207, the combined image 140 is displayed on the display device 4. If a trigger signal is received from the user, spectral measurements are triggered in step 211. In step 208, additional consecutive images are acquired by the camera 33a, and in step 209, these additional consecutive images are analyzed to detect whether the handheld measuring device HMD has been moved. If a movement is detected, the display device 4 stops displaying the combined image 140.

### Control device

Fig. 6 illustrates a highly schematic functional diagram of the electronic control device 300 in the handheld measuring device of Figs. 1 and 2. A processor 310 communicates via a bus system 301 with a non-volatile (ROM) memory 320, a volatile (RAM) memory 330, an input/output (I/O) interface 340, and a communication interface 350. The non-volatile memory 320 may be, e.g., a flash memory device. It stores, inter alia, an operating system 321 and several application programs, including image acquisition software 322 and image processing software 323. These pieces of software may implement the image acquisition steps and the image processing steps of the above-described method, respectively.

Attached to the input/output interface 340 are the display device 4, optionally a motion sensor 8 in the form of an acceleration sensor and/or gyroscope that is integrated into the handheld measuring device HMD, and a control member 9, e.g., in the form of one or more pushbuttons, for providing the trigger signal.

The communication interface 350 may include, e.g., one or more of an Ethernet interface, a WiFi interface, a Bluetooth^{™} interface etc. The control device 300 may transmit the first and second images and/or the combined image to an external computing device or external display via the communication interface 350. Likewise, the control device 300 may transmit spectral information obtained from the spectrally resolving detectors 31a, 32a to an external computing device via the communication interface 350.

## Claims

1. A method for investigating visual appearance of a sample surface (11) using a handheld measuring device (HMD) comprising at least one integrated light source (21-27) and at least one integrated camera (33a), the method comprising:
obtaining a combined image (140) of a measurement area (12) on the sample surface (11), using the at least one integrated light source (21-27) and the at least one integrated camera (33a); and
displaying the combined image (140) on a display device (4),
wherein the combined image (140) is a combination of a first image (110) and a second image (120),
wherein each of the first and second images (110, 120) is an image of the measurement area along an observation direction under illumination with directional light along an illumination direction,
wherein the illumination direction and the observation direction for the first image (110) define a first measurement geometry, in which the observation direction is oriented at a first aspecular angle with respect to a specular direction to the illumination direction, the first aspecular angle having an absolute value of at least 30°, and
wherein the illumination direction and the observation direction for the second image (120) define a second measurement geometry, in which the observation direction is oriented at a second aspecular angle with respect to a specular direction to the illumination direction, the second aspecular angle having an absolute value of not more than 15°.

2. The method of claim 1, wherein forming the combined image (140) comprises:
processing the second image (120); and
overlaying the processed second image (120) onto the first image (110).

3. The method of claim 2, wherein the second image (120) is acquired as a multi-spectral image, and wherein processing the second image (120) comprises converting the second image (120) into a grayscale image.

4. The method of claim 2 or 3, wherein processing the second image (120) comprises:
applying a defect detection algorithm, in particular, a thresholding or edge detection algorithm, to the second image (120) to identify image portions that represent defects.

5. The method of claim 4, wherein processing the second image (120) further comprises:
making image portions of the second image (120) that do not represent defects transparent.

6. The method of any one of the preceding claims, wherein the illumination direction in the second measurement geometry is different from the illumination direction in the first measurement geometry, and wherein preferably the observation direction is identical in the first and second measurement geometries.

7. The method of claim 6,
wherein the handheld measuring device (HMD) comprises first and second light sources, the first light source (21) being configured to illuminate the measurement area with directional light along a first illumination direction, and the second light source (24) being configured to illuminate the measurement area with directional light along a second illumination direction that is different from the first illumination direction,
wherein in the first measurement geometry, the measurement area is illuminated along the first illumination direction using the first light source (21),
wherein in the second measurement geometry, the measurement area is illuminated along the second illumination direction using the second light source (24), and
wherein preferably the same integrated camera (33a) is used in the first and second measurement geometries for obtaining the combined image (140).

8. The method of claim 7,
wherein the combined image (140) is obtained by simultaneously or consecutively illuminating the measurement area (12) along the first illumination direction, using the first light source (21), and along the second illumination direction, using the second light source (24), during a single integration window of the integrated camera (33a).

9. The method of any one of the preceding claims, wherein the combined image (240) is displayed on the display device (4) only during time periods in which the handheld measuring device (HMD) is stationary, and
wherein optionally preview images are displayed on the display device during time periods in which the handheld measuring device (HMD) is moving, the preview images being obtained with a single measurement geometry.

10. The method of claim 9, comprising:
continuously acquiring consecutive images of the measurement area (12), using the at least one integrated camera (33a);
detecting whether the handheld measuring device (HMD) is stationary, based on an analysis of the consecutive images;
only when the detection indicates that the handheld measuring device (HMD) has been stationary for a predetermined amount of time, displaying the combined image (140) on the display device (4); and
continuing to acquire further consecutive images of the measurement area and to detect whether the handheld measuring device (HMD) is remaining stationary, based on an analysis of the further consecutive images;
stopping the displaying of the combined image (140) on the display device (4) when the detection shows that the handheld measuring device (HMD) has been moved; and
optionally, displaying a preview image on the display device, the preview image being obtained with a single measurement geometry.

11. The method of any one of the preceding claims, further comprising:
carrying out a spectral measurement of the measurement area (12) using a spectrally resolving detector (31a; 32a) that is integrated in the handheld measuring device (HMD).

12. The method of claim 1, wherein the display device (4) is integrated in the handheld measuring device (HMD).

13. A handheld measuring device (HMD) for investigating visual appearance of a sample surface (11), the handheld measuring device (HMD) comprising:
at least one integrated light source (21-27);
at least one integrated camera (33a);
a display device (4); and
a control device (300) configured to carry out the method of any one of the preceding claims.

14. The handheld measuring device (HMD) of claim 13, further comprising a spectrally resolving detector (31a; 32a), wherein the control device (300) is configured to cause the spectrally resolving detector (31a; 32a) to carry out a spectral measurement of the measurement area (12).
